# EUROPÄISCHE PATENTSCHRIFT

(11) **EP 0 763 683 B1**
(45) Veröffentlichungstag und Bekanntmachung des Hinweises auf die Patenterteilung: **26.04.2000**
(21) Anmeldenummer: 96202499.8
(22) Anmeldetag: 09.09.1996
(51) Int. Cl.: F16K 31/40, F16K 1/30

(54) **Elektromagnetisch betätigbares Ventil**
Solenoid valve
Electrovanne

(30) Priorität: 18.09.1995 LU 88659
(43) Veröffentlichungstag der Anmeldung: 19.03.1997
(73) Patentinhaber: LUXEMBOURG PATENT COMPANY S.A., 1720 Luxembourg (LU)
(72) Erfinder: Offenwanger, 75248 Ölbronn - Dürren 2 (DE); Bermes, Karl, 54668 Echternacherbrück (DE)
(74) Vertreter: Meyers, Ernest

(56) Entgegenhaltungen:
- DE-A- 2 439 271
- DE-C- 864 496
- FR-A- 1 048 601
- US-A- 2 654 393
- US-A- 2 694 544
- PATENT ABSTRACTS OF JAPAN vol. 010, no. 014 (M-447), 21.Januar 1986 & JP-A-60 175878 (TOKYO KEIKI KK), 10.September 1985,

## Beschreibung

Die vorliegende Erfindung betrifft ein elektromagnetisch betätigbares Ventil für ein gasförmiges oder flüssiges Medium unter Druck mit den im Oberbegriff von Anspruch 1 definierten Merkmalen.

Die Erfindung bezieht sich insbesondere auf ein Ventil für Hochdruckgasbehälter , das heisst, Behälter mit einem Inhalt bis zu 300 bar , wie zum Beispiel bei stationären Feuerlöschanlagen oder für Kohlensäurebehälter von Getränkautomaten.

Damit bei Ventilen dieser Art für Hochdruckgas ein sicheres und leckfreies Abdichten gewährleistet ist, wird das Absperrorgan so angeordnet, dass es unter dem Gasdruck schliesst. Andererseits heisst das aber, dass zum Öffnen des Ventils der hohe Gasdruck mit verhältnismässig viel Kraft überwunden werden muss.

Aus der FR-A-1048601 ist ein elektromagnetisch betätigbares Ventil der eingangs beschriebenen Art bekannt in welchem der Gasdruck benutzt werden kann um das Ventil zu öffnen.

Die Aufgabe der vorliegenden Erfindung liegt darin, ein Ventil der eingangs beschriebenen Art zu schaffen, bei dem der hohe Schliessdruck mit verhältnismässig wenig Kraft überwunden werden kann und das auch bei Stromausfall noch bedient werden kann.

Erfindungsgemäss wird diese Aufgabe durch ein Ventil gemäss Anspruch 1 gelöst.

Beim erfindungsgemässen Ventil wird der hohe Gasdruck nicht nur dazu benutzt, um das Ventil zu schliessen, sondern auch um das Absperrorgan zu öffnen. Dies ist dadurch möglich, dass die vom Gasdruck beaufschlagte Spindelkolbenfläche im Druckraum grösser ist als die vom Druck effektiv beaufschlagte Fläche des Absperrorgans, weil eben der Durchmesser des Ventilsitzes kleiner ist als der Durchmesser des Spindelkolbens. Bei zweckmässiger Berechnung dieser Durchmesser entsteht deshalb ein von der Spindel auf das Absperrorgan ausgeübter Differentialdruck dessen Kraft ausreicht, um das Absperrorgan gegen den Gasdruck und die Kraft seiner Druckfeder von seinem Sitz abzuheben und das Ventil zu öffnen.

Das der Spindel entgegengesetzte Ende der Führungshülse ist dicht verschlossen und enthält einen ersten zylindrischen Magnetanker der über eine im Ventilgehäuse befindliche elektromagnetische Spule in der Führungshülse gegen die Wirkung einer Schliessfeder axial beweglich ist, wobei die dem Spindelkolben zugeordnete Seite dieses Magnetankers eine Dichtung aufweist, welche bei nicht erregter Spule unter der Wirkung der Schliessfeder die Austrittsöffnung des Druckausgleichkanals in der Spindel abdichtet.

Vorzugsweise befindet sich in der Führungshülse ein zweiter zylinderförmiger bewegbarer Magnetanker , der mittels eines längs dem ersten Magnetanker angeordneten Distanzstift vom Spindelkolben getrennt ist, wobei der Distanzstift länger ist als der erste Magnetanker und wobei die beiden Magnetanker bei erregter Spule sich gegenseitig gegen die Wirkung der Schliessfeder anziehen.

Der erste Magnetanker weist vorzugsweise einen axialen Stift auf, der gleitbar im zweiten Magnetanker ist und unmittelbar der Wirkung der Feder ausgesetzt ist , welche sich am Kopf der Führungshülse abstützt.

Der zwischen dem Kopf der Führungshülse und dem zweiten Magnetanker gebildete Federraum ist längs den Seitenflächen der Magnetanker in Druckverbindung mit dem Druckraum unterhalb des ersten Magnetankers.

Die Ausgangsöffnung des Druckausgleichkanals in dem Druckraum befindet sich vorzugsweise in einem Vorsprung der Kopffläche des Spindelkolbens.

Die elektromagnetische Betätigung dient lediglich dazu, die Druckverbindung zwischen dem Druckraum und dem Eintrittskanal herzustellen. Die für diese Betätigung erforderliche Kraft ist verhältnismässig gering. Sie erfolgt zwar gegen die Kraft der Schliessfeder , aber unter Mitwirkung der Kraft des Gasdrucks.

Die Austrittsöffnung des Druckausgleichkanals in den Druckraum ist möglichst klein, so dass sie mit einer verhältnismässig schwachen Schliessfeder abdichtbar ist.

Gemäss einer ersten Ausführung ist der Druckraum über eine seitliche Leitung in Druckverbindung mit dem Austrittskanal. Bei dieser Ausführung wird bei Unterbrechung der elektromagnetischen Erregung die Druckverbindung zum Druckraum unter der Wirkung der Schliessfeder unterbrochen. Da der Druck im Druckraum sich über die seitliche Leitung in den Austrittskanal abbauen kann, schliesst das Ventil deshalb automatisch unter der Wirkung des Gasdrucks und der Druckfeder auf das Absperrorgan.

Gemäss einer weiteren Ausführung ist der Druckraum bei geschlossener Stellung des Ventils durch eine Längsbohrung im Spindelkolben und einer radialen Bohrung im Ventilgehäuse mit der Umgebung verbunden, während in geöffneter Stellung des Ventils die Verbindung zwischen Druckraum und Umgebung vom Spindelkolben dicht verschlossen wird.

Bei dieser Ausführung bleibt das Ventil auch bei Unterbrechung der elektromagnetischen Erregung und verschlossenem Druckausgleichkanal offen , weil der Druck im Druckraum sich weder in die Umgebung noch in den Austrittskanal abbauen kann.

Die Erfindung wird nachfolgend mit Bezug auf die beiliegenden Zeichnungen und anhand einiger Ausführungsbeispiele näher beschrieben. Es zeigen :
Figur 1, schematisch einen Vertikalschnitt durch eine erste Ausführung eines erfindungsgemässen Ventils in geschlossener Stellung, wobei jedoch das erfindungswesentliche Hilfsventil nicht gezeigt ist;
Figur 2, das Ventil gemäss Figur 1 in geöffneter Stellung ;
Figur 3, den umrahmten Teil aus Figur 2 in vergrössertem Masstab ;
Figur 4, schematisch einen Vertikalschnitt durch eine zweite Ausführung eines erfindungsgemässen Ventils in geschlossener Stellung, wobei jedoch das erfindungswesentliche Hilfsventil nicht gezeigt ist ;
Figur 5, einen Teilschnitt einer erfindungsgemäßen Ausführung des Ventils mit Hilfsbetätigung bei Stromausfall.

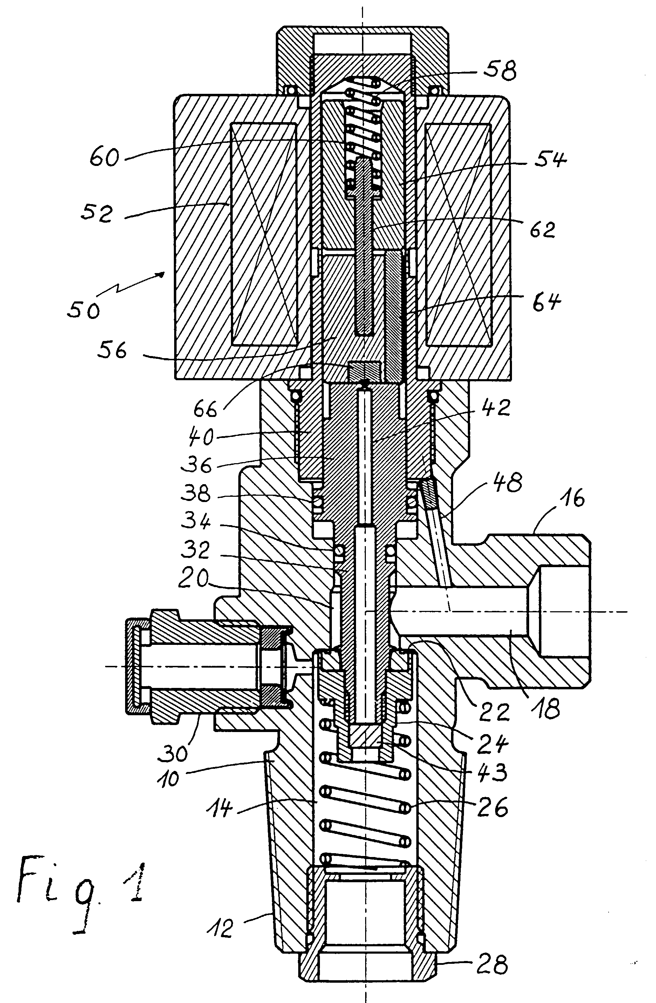

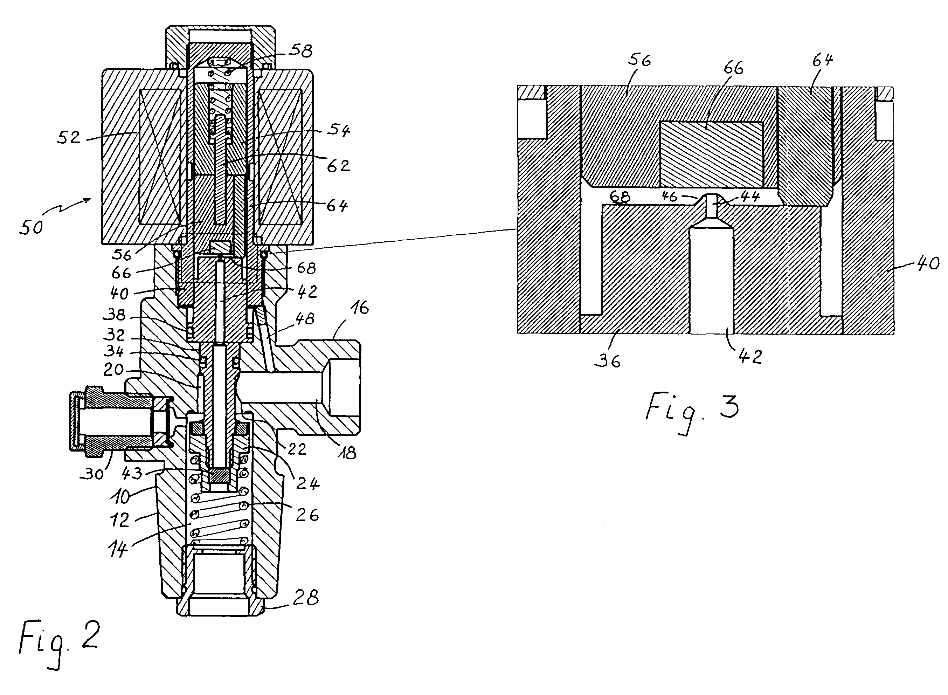

Das in den Figuren 1 und 2 gezeigte Ventil weist ein zum Beispiel metallisches Ventilgehäuse 10 mit einem äusseren Gewinde 12 zum Aufschrauben auf eine nicht gezeigte Hochdruckgasflasche oder ähnlichem Behälter auf. Das Ventilgehäuse 10 besitzt einen axialen Eintrittskanal 14 und einen radialen, durch einen seitlichen Anschlusstutzen 16 verlaufenden Austrittskanal 18.

Der Eintrittskanal 14 und der Austrittskanal 18 sind im Innern des Ventilgehäuses mit einer axialen Bohrung 20 verbunden. Diese axiale Bohrung 20 hat einen kleineren Durchmesser als der Eintrittskanal 14 und der schulterförmige Übergang ist als ringförmiger Sitz 22 eines Absperrorgans 24 ausgebildet. Dieses Absperrorgan 24 ist der Wirkung einer Druckfeder 26 ausgesetzt, welche sich an einer in den Eintrittskanal 14 geschraubten Muffe 28 abstützt.

Mit 30 ist ein übliches an sich bekanntes, zum Beispiel aus einer Platzmembran bestehendes Sicherheitsventil angedeutet , das bei anormalem Überdruck im Gasbehälter den Eintrittskanal 14 unmittelbar mit der Umgebung verbindet.

In der axialen Bohrung 20 befindet sich eine Spindel 32 deren unteres Ende sich durch den Ventilsitz 22 erstreckt und mit dem Absperrorgan 24 verschraubt ist. Oberhalb dem Ausgang des Eintrittskanals 18 ist die Spindel 32 mit einem O-Ring 34 dichtend geführt. Der Oberteil der Spindel 32 ist als erweiterter Spindelkolben 36 ausgebildet, der in einem erweiterten Bereich der Bohrung 20 ebenfalls mit einem O-Ring 38 dichtend geführt ist. Wichtig ist, wie weiter unten deutlich wird, dass der Durchmesser des Spindelkolbens 36 um einige Millimeter grösser ist als der Durchmesser des Ventilsitzes 22.

Der obere Bereich des Spindelkolbens 36 ist in einer in das Ventilgehäuse 10 einschraubbaren zylindriHülse 40 geführt. Diese Führung erfolgt ohne Dichtung und ist demgemäss gasdurchlässig. Dieser Bereich des Spindelkolbens 36 steht über eine seitliche, durch das Ventilgehäuse 10 verlaufende Leitung 48 in Druckverbindung mit dem Austrittskanal 18.

Ein axialer Druckausgleichkanal 42 durchquert die Spindel 32 auf der gesamten Länge bis zur Kopffläche des Spindelkolbens 36 und ist im unteren Bereich durch das Absperrorgan 24 und gegebenenfalls einen Sinterfilter 43 mit dem Eintrittskanal 14 in Druckverbindung. Im Bereich der Kopffläche des Spindelkolbens 36 schrumpft der Druckausgleichkanal 42 zu einer engen Austrittsöffnung 44 (Siehe auch Figur 3) in einem kleinen Vorsprung 46 in der Mitte der Kopffläche des Spindelkolbens 36 zusammen.

Der obere Teil des Gehäuses besteht aus einer elektromagnetischen Betätigungsvorrichtung 50 mit einer elektromagnetischen , um die Hülse 40 gewickelten Spule 52, die über einen nicht gezeigten Anschluss elektrisch mit Strom versorgt wird.

Die Betätigungsvorrichtung 50 weist zwei zylindrische, übereinanderliegende Magnetanker 54, 56 auf, welche in der Hülse 40 verschiebbar sind. Die Führung der beiden Anker in der Hülse 40 erfolgt ohne Dichtung und ist demgemäss auch gasdurchlässig , weshalb die Hülse 40 über dem obersten Anker 54 gasdicht verschlossen ist.

Beide Magnetanker sind der Wirkung einer Schliessfeder 58 ausgesetzt, welche zwischen dem Kopf der Führungshülse 40 und einer zentralen Bohrung 60 im oberen Magnetanker 54 eingespannt ist. Damit die Wirkung dieser Feder ebenfalls auf den unteren Magnetanker 56 übertragen wird, weist dieser einen axialen Stift 62 auf, der sich verschiebbar durch den oberen Anker 54 bis in die Bohrung 60 erstreckt und dort unmittelbar von der Kraft der Schliessfeder 58 beaufschlagt wird.

Zwischen dem oberen Magnetanker 54 und der Kopffläche des Spindelkolbens 36 ist ein Distanzstift 64 angeordnet , der sich durch oder längs dem unteren Anker 64 erstreckt. Da dieser Distanzstift 64 etwas länger ist als der untere Magnetanker 56, entsteht unter der Wirkung der Kraft der Schliessfeder 58 ein Spalt zwischen den beiden Magnetankern 54 und 56.

An der Unterseite des untersten Magnetankers 56 ist eine der Austrittsöffnung 44 im Spindelkolben 36 zugeordnete Dichtung 66 vorgesehen.

Bei nicht erregter Betätigungsvorrichtung 50 wird das Absperrorgan unter der Wirkung der Kraft der Druckfeder 26 und der Kraft des Gasdrucks im Gasbehälter in geschlossener Stellung auf dem Ventilsitz gehalten , so dass der Gasdurchfluss in Richtung Austrittsöffnung 18 gesperrt ist.

Unter der Wirkung der Kraft der Schliessfeder 58 bleibt der untere Magnetanker 56 in der untersten Stellung gemäss Figur 1, so dass die Dichtung 66 die Austrittsöffnung 44 im Spindelkolben 36 versperrt.

Wenn die Spule 52 der Betätigungsvorrichtung 50 erregt wird, wird durch die Spule 52 ein Magnetfeld erzeugt, das an den Grenzflächen der Magnetanker 54, 56 entgegengesetzte Ladungen aufbaut. Hierdurch ziehen die beiden Magnetanker 54, 56 sich gegenseitig gegen die Wirkung der Feder 58 an. Da der Distanzstift 64 eine Verschiebung des oberen Magnetankers 54 verhindert, wird der untere Magnetanker 56 gegen den oberen Magnetanker 54 gezogen, so dass der in Figur 1 gezeigte Spalt an der Grenzfläche zwischen den Magnetanker 54, 56 sich zwischen den Magnetanker 56 und den Spindelkolben 36 verlagert und hier einen Druckraum 68 bildet (Siehe Figur 3).

Beim Abheben des Magnetankers 56 vom Spindelkolben 36 wird die Austrittsöffnung frei, so dass das Gas durch den Druckausgleichkanal 42 fliessen kann und der Druck im Druckraum 68 auf den im Eintrittskanal 14 herrschenden Druck ansteigt. Da der Durchmesser des Spindelkolbens 36 wie bereits oben erwähnt, etwas grösser ist als der Durchmesser des Ventilsitzes 22, wirkt eine nach unten gerichtete Differentialdruckkraft auf die Spindel 32, welche grösser ist als die Kraft der Druckfeder 26, so dass die Spindel 32 und das Absperrorgan 24 gegen die Druckfeder 26 nach unten verschoben werden (Siehe Figur 2) und der Durchfluss des Gases in Richtung Austrittskanal demgemäss freigegeben wird.

Wie Figur 2 zeigt, folgen die beiden Magnetanker 54, 56 unter der Wirkung der Schliessfeder 60 der Abwärtsbewegung des Spindelkolbens 36. Solange die Spule 52 erregt bleibt, wird der untere Magnetanker 56 vom Anker 54 angezogen, so dass die Austrittsöffnung 44 geöffnet bleibt und der Druck im Druckraum 68 den Durchfluss durch das Ventil aufrecht erhält.

Wenn die Erregung der Spule 52 unterbrochen wird, bricht das Magnetfeld zusammen, so dass der Anker 56 nicht mehr vom Anker 54 angezogen wird und der Anker 56 unter der Wirkung der Schliessfeder 60 abwärts gegen den Spindelkolben 36 gedrückt. Hierbei ist kein wesentlicher Druck zu überwinden weil die beiden Anker nicht dicht in der Führungshülse 40 sitzen und demgemäss druckausgeglichen sind. Lediglich der Durchflussdruck durch die Austrittsöffnung 44 muss überwunden werden. Da diese Öffnung 44 jedoch klein ist, wird unter der Wirkung der Feder 60 die Austrittsöffnung 44 von der Dichtung 66 verschlossen , so dass der Druckraum 68 wieder vom Druckausgleichkanal 42 isoliert ist. Da der Spindelkolben 36 nicht dicht in der Hülse 40 geführt ist, kann sich der Druckraum 68 rasch durch die Leitung 48 in den Austrittskanal 18 entlüften, so dass die nach unten gerichtete Differentialkraft verfällt und das Ventil unter der Wirkung der Druckfeder und dem Gasdruck druck unter Einnahme der in Figur 1 gezeigten Stellung schliesst.

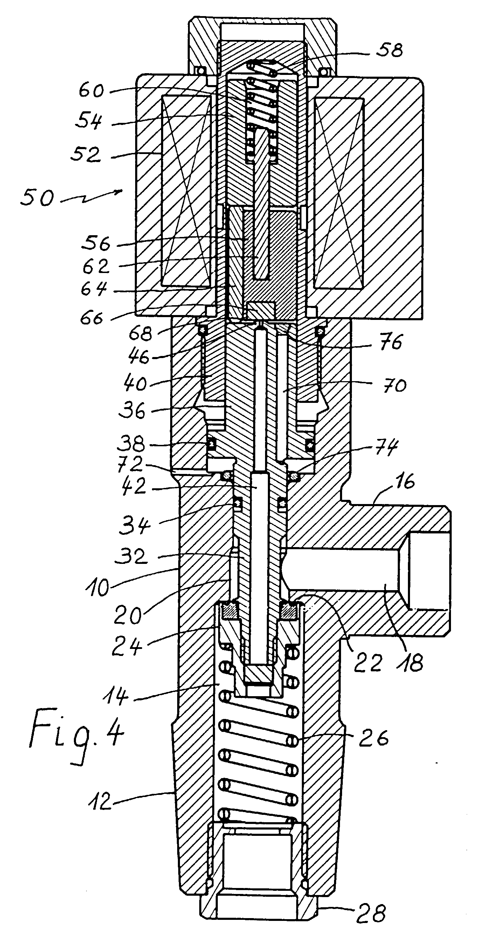

Figur 4 zeigt einen Schnitt durch eine weitere Ausführung eines erfindungsgemässen Ventils , wobei die Bezugszahlen aus Figur 1 für funktionsähnliche Teile beibehalten wurden.

Ein wesentlicher Unterschied zwischen den beiden Ausführungen ist, dass in Figur 2 die seitliche Leitung 48 aus Figur 1 entfällt und dass der Druckraum 68 demgemäss nicht mehr mit dem Austrittskanal 18 verbunden ist.

Bei der Ausführung gemäss Figur 4 weist der Spindelkolben 36 jedoch eine Längsbohrung 70 auf, während das Ventilgehäuse 10 etwa zwischen den Dichtungen 34 und 38 der Spindel 32 durch eine radiale Bohrung 72 nach aussen geöffnet ist. An der schulterförmigen Erweiterung der axialen Bohrung 20 zwischen dem engeren unteren Bereich und dem breiteren oberen Bereich befindet sich desweiteren eine Dichtung 74 , zum Beispiel ein O-Ring.

Die Funktionsweise beim Öffnen des Ventils von Figur 4 ist die gleiche wie zuvor für die erste Ausführung beschrieben wurde. Da der Druckraum 68 über dem Spindelkolben 36 nicht mehr mit dem Austrittskanal 18 verbunden ist, kann der Druckraum sich nicht in diese Richtung entlüften wenn die elektrische Erregung der Spule 52 unterbrochen wird. Ein Druckabbau durch die radiale Bohrung 72 ist ebenfalls nicht möglich weil in geöffneter Stellung des Ventils die Verbindung zwischen der Längsbohrung 70 und der radialen Bohrung 72 durch die Dichtung 74 unterbrochen ist. Da kein Druckabbau des Druckraums 68 möglich ist, bleibt das Ventil der Ausführung gemäss Figur 4 offen, auch wenn die elektromagnetische Betätigung unterbrochen wird.

Die beiden Bohrungen 70 und 72 haben keine Funktion beim Öffnen und Schliessen des Ventils. Sie sind lediglich Entlüftungsbohrungen und dienen zum Abbau von kleinen Leckagen, die bei einer defekten Dichtung 66 der Austrittsöffnung 44 des Spindelkolbens entstehen könnten.

An dem druckraumseitigen Eingang in die Bohrung 76 sitzt vorzugsweise ein Sinterfilter 76. Dieser Filter ist einerseits ausreichend gasdicht um bei der Öffnungsphase den Druckaufbau im Druckraum 68 zu ermöglichen. Andererseits ist der Filter 76 aber auch ausreichend gasdurchlässig um bei geschlossenem Ventil einen Druckabbau bei Leckagen zu ermöglichen.

Wenn diese Entlüftungsöffnungen nicht vorhanden wären, könnte eine Leckage an dieser Stelle zu einem Druckaufbau im Druckraum und einem selbsttätigen Öffnen des Ventils führen.

Bei der Ausführung gemäss Figur 1 ist diese Vorsichtsmassnahme nicht erforderliche, weil eine Entlüftung durch die Leitung 48 möglich ist.

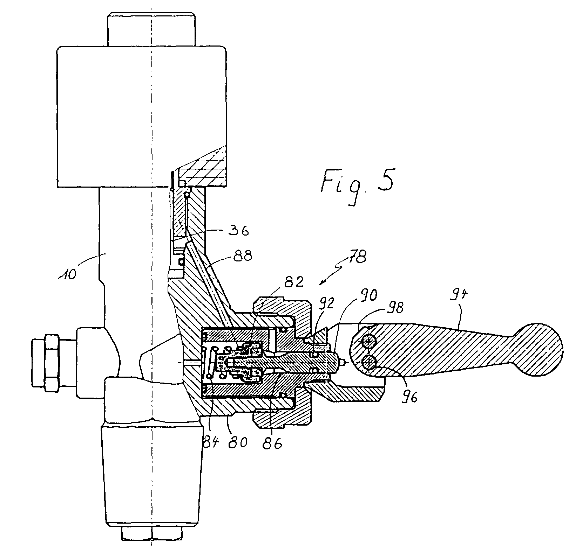

Figur 5 zeigt den Erfindungsgedanken um das Ventil auch bei Stromausfall noch bedienen zu können. Diese zusätzliche Massnahme ist erfindungsgemäß auch bei den beiden Ausführungen der Figuren 1 und 4 vorgesehen.

Gemäss Figur 5 besitzt das Ventilgehäuse 10 einen zweiten seitlichen Stutzen 80, in welchem ein Hilfsventil 78 vorgesehen ist. Dieses Hilfsventil 78 umfasst ein Absperrorgan 82 , das unter der Wirkung einer Feder 84 und des Gasdrucks im Gasbehälter dicht auf seinem Sitz gehalten wird. Stromabwärts vom Absperrorgan 82 befindet sich eine Bohrung 86 welche über einen By-Pass 88 in Druckverbindung mit dem Druckraum 68 über dem Spindelkolben 36 (Siehe Figuren 1 und 4) steht. In der Bohrung 86 ist ein Stössel 90 mit einer Dichtung 92 gleitend angeordnet. Das innere Ende des Stössels 90 ist in das Absperrorgan 82 eingeschraubt. Ausserhalb des Stutzens 80 ist ein Handhebel 94 vorgesehen, der um eine exzentrische Achse 96 schwenkbar ist und eine Nockenfläche 98 aufweist.

In der in Figur 5 gezeigten Stellung des Handhebels 94 ist das Hilfsventil 78 geschlossen. Wird der Handhebel 94 um 90 ° im Gegenuhrzeigersinn geschwenkt, dann kommt die Nockenfläche 98 in Eingriff mit dem Stössel 90, der das Absperrorgan 82 gegen den Gasdruck und die Kraft der Feder 84 öffnet, so dass über den By-Pass 88 eine Verbindung zum Druckraum 68 hergestellt wird und das Absperrorgan 24 (Siehe Figuren 1 und 4) geöffnet wird. Genau wie bei der elektromagnetischen Auslösung, wird also der Gasdruck im Gasbehälter benutzt, um das Ventil zu öffnen.

Wenn der Handhebel 94 wieder in die in Figur 5 gezeigte Ausgangsstellung geschwenkt wird, schliesst das Ventil bei der Ausführung gemäss Figur 1 und bleibt offen bei der Ausführung gemäss Figur 4.

Anstatt das Hilfsventil 78 manuell mit einem Handhebel zu betätigen, ist es auch möglich, eine andere Betätigungsvorrichtung wie zum Beispiel eine pneumatische Betätigungsvorrichtung vorzusehen.

Obschon das Ventil beispielsweise für ein gasförmiges Medium beschrieben wurde, so kann es ebenfalls für flüssige Medien verwendet werden.

## Patentansprüche

1. Elektromagnetisch betätigbares Ventil für ein gasförmiges oder flüssiges Medium unter Druck mit einem an einem Gasbehälter befestigbaren Ventilgehäuse (10), einem axialen Eintrittskanal (14), einem durch einen seitlichen Anschlusstutzen (16) verlaufenden Austrittskanal (18), einer an den Eintrittskanal (14) anschliessenden axialen Bohrung (20), wobei die schulterförmige Verbindung zwischen dem Eintrittskanal (14) und der Bohrung (20) als ringförmiger Ventilsitz (22) ausgebildet ist, einem unter der Wirkung einer Druckfeder (26) und des Gasdrucks auf dem Ventilsitz (22) gehaltenen Absperrorgan (24) und einer in der Bohrung dicht geführten, axial beweglichen und auf das Absperrorgan (24) wirkenden Spindel (32), wobei das dem Absperrorgan (24) entgegengesetzte Ende der Spindel (32) als ein, in einer zylindrischen Führungshülse (40) geführter Spindelkolben (36) ausgebildet ist mit einem grösseren Durchmesser als der Durchmesser des Ventilsitzes (22)und die Spindel (32) und das Absperrorgan (24) von einem axialen Druckausgleichkanal (42) durchquert sind und an der Kopffläche des Spindelkolbens (36) ein Druckraum (68) ausgebildet ist, der mittels eines elektromagnetisch betätigten Schliessorgans durch den Druckausgleichkanal (42) mit dem Eintrittskanal (14) verbindbar ist, **dadurch gekennzeichnet,** dass das Ventilgehäuse (10) ein Hilfsventil (78) aufweist, mit dem der Druckraum (68) über einen durch das Ventilgehäuse (10) verlaufenden By-Pass (88) mit dem Eintrittskanal (14) verbindbar ist.

2. Ventil nach Anspruch 1, **dadurch gekennzeichnet,** dass das der Spindel (32) entgegengesetzte Ende der Führungshülse (40) verschlossen ist und einen ersten zylinderförmigen Magnetanker (56) enthält, der über eine im Ventilgehäuse befindliche elektromagnetische Spule (52) in der Führungshülse (40) gegen die Wirkung einer Schliessfeder (58) axial beweglich ist, dass die dem Spindelkolben (36) zugeordnete Seite dieses Magnetankers (56) eine Dichtung (66) aufweist, welche bei nicht erregter Spule (52) unter der Wirkung der Schliessfeder (58) die Austrittsöffnung (44) des Druckausgleichkanals (42) in der Spindel (32) abdichtet.

3. Ventil nach Anspruch 2, **gekennzeichnet durch** einen zweiten zylinderförmigen , in der Führungshülse (40) bewegbaren Magnetanker (54), der mittels eines längs dem ersten Magnetanker (56) angeordneten Distanzstift (64) vom Spindelkolben (36) getrennt ist, wobei der Distanzstift (64) länger ist als der erste Magnetanker (56) und wobei die beiden Magnetanker (54), (56) bei erregter Spule (52) sich gegenseitig gegen die Wirkung der Schliessfeder (58) anziehen.

4. Ventil nach Anspruch 3, **dadurch gekennzeichnet,** dass der erste Magnetanker (56) einen axialen Stift (62) aufweist, der gleitbar im zweiten Magnetanker (54) ist und unmittelbar der Wirkung der Schliessfeder ausgesetzt ist , welche sich am Kopf der Führungshülse (40) abstützt.

5. Ventil nach einem der Ansprüche 2 bis 4, **dadurch gekennzeichnet,** dass der zwischen dem Kopf der Führungshülse (40) und dem zweiten Magnetanker (54) gebildete Federraum längs den Seitenflächen der Magnetanker (54), (56) in Druckverbindung mit dem Druckraum (68) unterhalb des ersten Magnetankers (56) steht.

6. Ventil nach einem der Ansprüche 2 bis 5, **dadurch gekennzeichnet,** dass die Ausgangsöffnung (44) des Druckausgleichkanals (42) in den Druckraum (68) sich in einem Vorsprung (46) der Kopffläche des Spindelkolbens (36) befindet.

7. Ventil nach einem der Ansprüche 1 bis 6, **dadurch gekennzeichnet,** dass der Druckraum (68) über eine seitliche Leitung (48) mit dem Austrittskanal (18) in Druckverbindung steht.

8. Ventil nach einem der Ansprüche 1 bis 6, **dadurch gekennzeichnet,** dass der Druckraum (68) bei geschlossener Stellung des Ventils durch eine Längsbohrung (70) im Spindelkolben (36) und eine radiale Bohrung (72) im Ventilgehäuse (10) mit der Umgebung verbunden ist und dass in geöffneter Stellung des Ventils die Verbindung zwischen dem Druckraum (68) und der Umgebung vom Spindelkolben (36) an einer Dichtung (74) dicht verschlossen wird.

9. Ventil nach Anspruch 1, **dadurch gekennzeichnet,** dass das Hilfsventil (78) mit einem Handhebel (94) manuell betätigbar ist.

## Claims

1. Electromagnetically actuable valve for a gaseous or liquid medium under pressure with a valve housing (10) that can be attached to a gas container, an axial inlet passage (14), an outlet passage (18) running through a lateral connection stub (16), an axial hole (20) adjoining the inlet passage (14), the connection in the form of a shoulder between the inlet passage (14) and the hole (20) being designated as an annular valve seat (22), with a shut-off element (24) held on the valve seat (22) under the action of a compression spring (26) and of the gas pressure, and a spindle (32) which is guided in leaktight fashion in the hole, can be moved axially and acts on the shut-off element (24), whereby the end of the spindle (32) remote from the shut-off element (24) is designed as a spindle piston (36) which is guided in a cylindrical guiding sleeve (40) and has a larger diameter than the diameter of the valve seat (22) and whereby the spindle (32) and the shut-off element (24) are traversed by an axial pressure-balance passage (42) a pressure space (68) which can be connected to the inlet passage via the pressure-balance passage (42) by means of an electromagnetically actuated closing element being formed at the top surface of the spindle piston (36), characterized in that the valve housing (10) has an auxiliary valve (78) by means of which the pressure space (68) can be connected to the inlet passage (14) via a bypass (88) running through the valve housing (10).

2. Valve according to claim 1, characterized in that the end of the guiding sleeve (40) remote from the spindle (32) is closed and contains a first cylindrical magnet armature (56), which can be moved axially in the guiding sleeve (40) counter to the action of a closing spring (58) by means of an electromagnetic coil (52) situated in the valve housing, in that that side of this magnet armature (56) which is associated with the spindle piston (36) has a seal (66) which, under the action of the closing spring (58), closes off the outlet opening (44) of the pressure-balance passage (42) in the spindle (32) when the coil (52) is not excited.

3. Valve according to claim 2, characterized by a second cylindrical magnet armature (54), which can be moved in the guiding sleeve (40) and is separated from the spindle piston (36) by means of a distance pin (64) arranged along the first magnet armature (56), the distance pin (64) being longer than the first magnet armature (56) and, when the coil (52) is excited, the two magnet armatures (54), (56) attracting one another counter to the action of the closing spring (58).

4. Valve according to claim 3, characterized in that the first magnet armature (56) has an axial pin (62) which is slidable in the second magnet armature (54) and is exposed directly to the action of the closing spring, which is supported against the head of the guiding sleeve (40).

5. Valve according to one of claims 2 to 4, characterized in that the spring space formed between the head of the guiding sleeve (40) and the second magnet armature (54) is connected along the lateral surfaces of the magnet armatures (54), (56) to the pressure in the pressure space (68) underneath the first magnet armature (56).

6. Valve according to one of claims 2 to 5, characterized in that the outlet opening (44) of the pressure-balance passage (42) into the pressure space (68) is situated in a projection (46) on the top surface of the spindle piston (36).

7. Valve according to one of claims 1 to 6, characterized in that there is a pressure connection between the pressure space (68) and the outlet passage (18) by way of a lateral conduit (48).

8. Valve according to one of claims 1 to 6, characterized in that, in the closed position of the valve, the pressure space (68) is connected to the environment by a longitudinal hole (70) in the spindle piston (36) and a radial hole (72) in the valve housing (10) and in that, in the open position of the valve, the connection between the pressure space (68) and the environment is closed in a leaktight fashion by the spindle piston (36) at a seal (74).

9. Valve according to claim 1, characterized in that the auxiliary valve (78) can be actuated manually by means of a hand lever (94).

## Revendications

1. Robinet à manoeuvre électromagnétique pour un milieu gazeux ou liquide sous pression comprenant un boîtier (10) de robinet pouvant être fixé sur un réservoir de gaz, un canal d'entrée axial (14), un canal de sortie (18) s'étendant à travers un raccord latéral (16), un alésage axial (20) prolongeant le canal d'entrée (14) dans lequel l'épaulement formant la transition entre le canal d'entrée (14) et l'alésage (20) est conçu comme siège annulaire (22), un organe de fermeture (24) maintenu sur le siège (22) sous l'action d'un ressort de pression (26) et de la pression du gaz et une tige (32) axialement mobile guidée de manière étanche dans l'alésage et agissant sur l'organe de fermeture (24), l'extrémité de la tige (32) opposée à l'organe de fermeture (24) étant constituée sous forme d'un piston de la tige (36) guidée dans une douille de guidage cylindrique (40) et ayant un diamètre supérieur au diamètre du siège (22), la tige (32) et l'organe de fermeture (24) étant traversé par un canal axial de compen-sation de pression (42), une chambre de pression (68) étant formée à la surface supérieure du piston de la tige (36) qui peut être reliée par un dispositif de fermeture à manoeuvre électromagnétique, à travers le canal de compensation de pression (42), avec le canal d'entrée (14), caractérisé en ce que le boîtier (10) du robinet comporte une vanne auxiliaire (78) par laquelle la chambre de pression (68) peut être reliée au canal d'entrée (14) à travers une dérivation (88) s'étendant à travers le boîtier (10) du robinet.

2. Robinet selon la revendication 1, caractérisé en ce que l'extrémité de la douille de guidage (40) opposée à la tige (32) est fermée et renferme une première armature d'aimant (56) de forme cylindrique qui est déplaçable axialement dans la douille de guidage (40) contre l'action du ressort de guidage (58) sous l'action d'une bobine électromagnétique (52) se trouvant dans le boîtier du robinet et en ce que l'extrémité de cette armature d'aimant (56) se trouvant du côté du piston de la tige (36) comporte un joint (66) qui, lorsque la bobine (52) n'est pas excitée, ferme de manière étanche sous l'effet du ressort de fermeture (58) l'orifice de sortie (44) du canal de compensation de pression (42) dans la tige (32).

3. Robinet selon la revendication 2, caractérisé en ce que, dans la douille de guidage (40) se trouve une seconde armature d'aimant (54) obile de forme cylindrique qui est séparée du piston de la tige (36) à l'aide d'une tige d'espacement (64) prévue le long de la première arma-ture d'aimant (56), en ce que la tige d'espacement (64) est plus longue que la première armature d'aimant (56) et en ce que les deux armatures d'aimant (54, 56) lorsque la bobine (52) est excitée, s'attirent mutuelle-ment contre l'effet du ressort de fermeture (58).

4. Robinet selon la revendication 3, caractérisé en ce que la première armature d'aimant (56) possède une broche axiale (62) qui peut coulisser dans la deuxième armature (54) et qui est exposée directement à l'action du ressort qui prend appui en tête de la douille de guidage (40).

5. Robinet selon l'une des revendications 2 à 4, caractérisé en ce que la chambre de ressort formée entre la tête de la douille de guidage (40) et la seconde armature d'aimant (54) est, le long des parois latérales des armatures d'aimant (54, 56) en communication pneumatique avec la chambre de pression (68) en dessous de la première armature d'aimant (56).

6. Robinet selon l'une des revendications 2 à 5, caractérisé en ce que l'orifice de sortie (44) du canal de compensation de pression (42) dans la chambre de pression (68) se trouve sur une saillie (46) de la surface frontale du piston de la tige (36).

7. Robinet selon l'une des revendications 1 à 6, caractérisé en ce que la chambre de pression (68) est en communication pneumatique avec le canal de sortie (18) à travers une conduite latérale (48).

8. Robinet selon l'une des revendications 1 à 6, caractérisé en ce que la chambre de pression (68) est, en position fermée du robinet, en communication avec le milieu ambiant à travers un canal longitudinal (70) dans le piston de la tige (36) et un passage radial (72) dans le boîtier (10) du robinet et en ce que, dans la position ouverte du robinet, la communication entre la chambre de pression (68) et le milieu ambiant est fermée de manière étanche par le piston de la tige (36) sur un joint (74).

9. Robinet selon la revendication 1, caractérisé en ce que la vanne auxiliaire (78) est manoeuvrable manuellement à l'aide d'une manette (94).
